**Europäisches Patentamt**

**European Patent Office**

**Office européen des brevets**

(19)

(11) Veröffentlichungsnummer : **0 414 734 B1**

(12) # EUROPÄISCHE PATENTSCHRIFT

(45) Veröffentlichungstag der Patentschrift :
   **28.10.92 Patentblatt 92/44**

(51) Int. Cl.⁵ : **A23B 4/02, A23B 4/14**

(21) Anmeldenummer : **89905036.3**

(22) Anmeldetag : **05.05.89**

(86) Internationale Anmeldenummer :
   **PCT/AT89/00046**

(87) Internationale Veröffentlichungsnummer :
   **WO 89/11224 30.11.89 Gazette 89/28**

(54) **VORRICHTUNG ZUR INTENSIVIERUNG DER DURCHDRINGUNG VON FLEISCH ODER FLEISCHWAREN MIT BEHANDLUNGSFLÜSSIGKEIT.**

(30) Priorität : **20.05.88 AT 1320/88**

(43) Veröffentlichungstag der Anmeldung :
   **06.03.91 Patentblatt 91/10**

(45) Bekanntmachung des Hinweises auf die
   Patenterteilung :
   **28.10.92 Patentblatt 92/44**

(84) Benannte Vertragsstaaten :
   **BE CH DE FR GB IT LI NL SE**

(56) Entgegenhaltungen :
   **WO-A-83/03522**
   **FR-A- 441 506**
   **US-A- 1 502 409**

(73) Patentinhaber : **Inject Star Pökelmaschinen
   Gesellschaft m.b.H.
   Innstrasse 23-25
   A-1201 Wien (AT)**

(72) Erfinder : **PROSENBAUER, Otto
   Innstrasse 23
   A-1201 Wien (AT)**

(74) Vertreter : **Brauneiss, Leo et al
   Patentanwälte Dipl.-Ing. Leo Brauneiss
   Dipl.-Ing. Dr. Helmut Wildhack Landstrasser
   Hauptstrasse 50 Postfach 281
   A-1031 Wien (AT)**

EP 0 414 734 B1

## Beschreibung

Die Erfindung bezieht sich auf eine Vorrichtung zur Intensivierung der Durchdringung von Fleisch oder Fleischwaren als zu behandelndem Gut mit Behandlungsflüssigkeit, mit einem Behälter für das Gut, in dem eine Sprüheinrichtung zur Besprühung des Gutes mit der Berandlungsflüssigkeit angeordnet ist, wobei im Behälter unten ein Auffangraum für die Behandlungsflüssigkeit liegt, von dem eine mit einer Pumpe versehene Förderleitung für die Behandlungsflüssigkeit zur im oberen Bereich des Behälters angeordneten Sprüheinrichtung führt.

Bekanntlich werden zahlreiche Fleisch- oder Fleischwarensorten mit einer Behandlungsflüssigkeit, z.B. Salz- oder Gewürzlake, behandelt, wobei Wert darauf gelegt wird, daß diese Flüssigkeit möglichst stark und gleichmäßig das zu behandelnde Gut durchdringt. Es ist hiezu bekannt, das Gut in einen rotierenden Behälter einzubringen, der an seiner Innenwand mit Schikanen versehen ist und in den die Behandlungsflüssigkeit während der Rotation des Behälters oder während Pausen derselben eingesprüht wird. Für die Behandlung von solchem Gut, welches besser in Ruhe der Einwirkung der Behandlungsflüssigkeit ausgesetzt werden soll, ist diese Vorgangsweise aber nicht zweckmäßig. Für solches Gut ist es bekannt, das Gut in einen faßartigen Behälter einzulegen und mit der Behandlungsflüssigkeit zu versetzen, die auf das in Ruhe befindliche Gut längere Zeit einwirken gelassen wird. Der Druck des im Behälter gestapelten Gutes bewirkt, daß insbesondere aus den unteren Gutschichten der eigene Saft des Gutes, z.B. die flüssigen Fettanteile, ausgedrückt werden und sich mit der Behandlungsflüssigkeit vermischen. Um eine gleichmäßige Einwirkung auf alle Gutpartien zu erzielen, wird bei dieser Vorgangsweise das eingebrachte Gut in bestimmten Zeitintervallen, z.B. alle drei bis vier Tage, umgelegt, was mühsam und zeitraubend ist.

Es ist auch eine Vorrichtung der eingangs beschriebenen Art bekannt (DE-A 3 431 338), bei welcher in einen tunnelartigen Behälter ein Hordenwagen einschiebbar ist, welcher das zu behandelnde Fleisch aufeinandergestapelt trägt. Dieses Fleisch kann durch eine Preßeinrichtung von oben her unter Druck gesetzt und zusätzlich durch eine Vibrationseinrichtung gerüttelt werden. Von oben her wird das Fleisch hiebei mittels einer Berieselungsvorrichtung mit Lauge berieselt. Diese Lauge und die durch den auf das Fleisch ausgeübten Druck aus diesem austretende Flüssigkeit wird unten im Behälter aufgefangen und mittels eines Absaugstutzens zu einer Pumpe geführt, welche diese Flüssigkeit wieder der Berieselungsvorrichtung zuführt. Hieran ist aber zunächst nachteilig, daß der Hordenwagen und seine Führung einen verhältnismäßig hohen Aufwand bedingen und daß der Hordenwagen sowohl von der über die Berieselungseinrichtung zugeführten Flüssigkeit abgespült wird, als auch durch die aus dem Fleisch austretende Flüssigkeit. Da diese Flüssigkeit im Kreislauf geführt wird, gelangen über den Hordenwagen in den Behälter eingebrachte Verunreinigungen in das Fleisch. Weiters ist nachteilig, daß sich nur eine begrenzte Durchtränkung des Fleisches mit der über die Berieselungseinrichtung zugeführten Flüssigkeit ergibt, da diese Flüssigkeit seitlich aus dem gestapelten Fleisch austritt.

Die Erfindung setzt sich zur Aufgabe, eine Vorrichtung der eingangs geschilderten Art so zu verbessern, daß eine gleichmäßige und intensive Durchdringung des zu behandelnden Gutes mit der Behandlungsflüssigkeit bei im Vergleich zu den bekannten Vorrichtungen wesentlich reduziertem Arbeits- und Vorrichtungsaufwand erzielt wird, wobei zugleich auch die erwähnten Verunreinigungen vermieden werden. Die Erfindung löst diese Aufgabe dadurch, daß die Sprüheinrichtung innen an einem abnehmbaren Deckel des Behälters befestigt ist und daß im Behälter ein Siebboden für das aufeinander gestapelte Gut von der Behälterwand gehalten ist, wobei der Auffangraum zwischen dem Siebboden und dem Boden des Behälters liegt. Beim Betrieb einer solchen Vorrichtung wird das zu behandelnde Gut, z.B. Rohpökelware, Speck, fetthältiges Fleisch od. dgl. auf dem Siebboden aufgestapelt, bis der Behälter im wesentlichen voll ist. Es bildet also der Behälter unmittelbar den Aufnahmeraum für das zu behandelnde Gut, so daß der Hordenwagen der zuletzt beschriebenen bekannten Vorrichtung eingespart wird, was außer einer Verringerung des Aufwandes die Vermeidung der erwähnten Verunreinigungen mit sich bringt. Außerdem kann der Behälter als Transportbehälter für das Gut dienen, welches also z.B. an einer anderen Bearbeitungsstelle, z. B. einer Massieranlage, unmittelbar in den Behälter abgefüllt werden kann, was eine wesentliche Einsparung an Arbeitsvorgängen bedeutet. Bei der erfindungsgemäßen Vorrichtung tritt der Saft des zu behandelnden Gutes durch das Eigengewicht des gestapelten Gutes aus, tritt jedoch im wesentlichen in die darunter liegenden benachbarten Gutstücke ein und läuft daher im Behälter im wesentlichen von oben nach unten, bis dieser Saft durch den Siebboden hindurch in den Auffangraum gelangt, aus welchem der Saft durch die Pumpe hochgepumpt und der Sprüheinrichtung zugeführt, welche die Mischung aus Behandlungsflüssigkeit und Gutsaft neuerlich von oben auf das Gut aufsprüht. Dieser Vorgang wiederholt sich im Kreislauf beliebig oft. Die erwähnte, im wesentlich vertikal gerichtete Durchströmung des Gutstapels durch die Behandlungsflüssigkeit als auch durch den eigenen Gutsaft ergibt eine wesentlich gleichmäßigere und intensivere Durchsetzung des zu behandelnden Gutes mit dieser Flüssigkeit, welche bei der zuletzt beschriebenen bekannten Vorrichtung insbesondere in den unieren Gutpartien nicht auftreten kann.

Gegebenenfalls kann bei der erfindungsgemäßen Vorrichtung nach Evakuierung des Behälters der Besprühungsvorgang unter Vakuum durchgeführt werden und bzw. oder es kann zusätzliche Behandlungsflüssigkeit zugegeben werden. z.B. in Form von Aufgußlake. In allen Fällen ergibt sich im Vergleich zu den bekannten Behandlungsweisen nicht nur eine Verkürzung der gesamten nötigen Arbeitszeit, sondern auch eine Verbesserung der erzielten Durchtränkung des Gutes mit der Behandlungsflüssigkeit, welche Durchtränkung durch die Anwendung von Vakuum im Behälter noch steigerbar ist.

Aus der DE-C 57 350 ist zwar ein Siebboden in einem Behälter für die Einpökelung von Fleisch bekannt, aber zu einem anderen Zweck. Dort liegt das zu pökelnde Fleisch in einem Lakebad und es wird in einen Raum unterhalt des Siebbodens Luft eingeblasen, um eine Belüftung des Fleisches von unten zu erzielen. Eine Berieselung des Gutes von oben ist bei dieser bekannten Konstruktion nicht vorgesehen, so daß diese Konstruktion nicht im Sinne der Erfindung wirken kann. Dies gilt auch für eine weitere bekannte Konstruktion (US-A 1 033 269), bei welcher das zu behandelnde Gut in einem stehenden Behälter liegt, in welchen Lake über eine Leitung unter Druck im Kreislauf eingeführt wird. Die Lake steigt hiebei im Behälter auf, sodaß die Strömungsrichtung im Behälter bei dieser bekannten Vorrichtung umgekehrt ist zu jener nach der Erfindung.

Dadurch, daß bei der erfindungsgemäßen Vorrichtung die Sprüheinrichtung am abnehmbaren Behälterdeckel innen befestigt ist, wird die Sprüheinrichtung bei Abnehmen des Deckeis, also bei der Befüllung bzw. Entleerung des Behälters, mit dem Deckel zusammen vom Behälter entfernt und steht daher bei der Füllung bzw. Entleerung nicht im Wege.

Es ist zweckmäßig, wenn im Rahmen der Erfindung an die Pumpe eine, vorzugsweise einstellbare, Zeitsteuerung für impulsweisen Betrieb angeschlossen ist, so daß die Pumpe nicht dauernd laufen muß. Dies bedeutet eine Energieeinsparung und vermeidet einen Trockenlauf der Pumpe, insbesondere wenn im Rahmen der Erfindung die Pausenzeit des impulsweisen Betriebes um ein Vielfaches länger ist als die Betriebszeit, wobei vorzugsweise die Pausenzeit im Minutenbereich liegt, die Betriebszeit im Bereich weniger Sekunden.

Es ist zweckmäßig, den vom Behälter trennbaren Siebboden auf eine von der Behälterinnenwand abstehende Auflage aufzulegen und durch einen Zentrierzapfen am Behälterboden zu zentrieren. Dadurch wird eine leichte Reinigung des Siebbodens möglich, zusammen mit einer stets exakten Betriebslage im Behälter.

Um die Förderleitung nach Abschluß der Behandlung entleeren zu können, ist im Rahmen der Erfindung an der tiefsten Stelle der Förderleitung ein Ablaßhahn vorgesehen.

Wie bereits erwähnt, muß die Sprüheinrichtung das im Behälter aufgestapelte Gut von oben besprühen, um im angestrebten Sinn wirksam zu sein. Es ist heibei gemäß einer bevorzugten Ausführungsform der Erfindung zweckmäßig, wenn die Sprüheinrichtung mittels einer einen vom Behälter angetragenen Anschlußstutzen und eine vom Deckel getragene Verbindungsmuffe aufweisenden Steckkupplung an die Förderleitung anschließbar ist. Dadurch wird ein automatischer Anschluß der Sprüheinrichtung an die Förderleitung beim Aufsetzen des Deckels erzielt

Es ist im Rahme der Erfindung ferner vorteilhaft, an der Innenseite des Deckels unterhalb der Sprüheinrichtung ein vom Deckel getragenes Verteilerlochblech anzuordnen. Dieses Verteilerlochblech gewährleistet einerseits, daß die über die Sprüheinrichtung auf das Gut aufgebrachte Flüssigkeit möglichst gleichmäßig über den Querschnitt des Behälters verteilt wird, anderseits wird eine direkte Besprühung des Gutes vermieden

Zweckmäßig ist im Rahmen der Erfindung die Pumpe außerhalb des Behälters angeordnet, wobei die Förderleitung von der tiefsten Stelle des Auffangraumes, dessen Boden durchsetzend, ausgeht und an einer höher als der Siebboden gelegenen Stelle wieder in den Behälter zurückführt. Auf diese Weise nimmt die Pumpe keinen Platz im Behälter weg und es ist ihr Motor bzw. das Außengehäuse besser gegen die oft aggressive Behandlungsflüssigkeit geschützt.

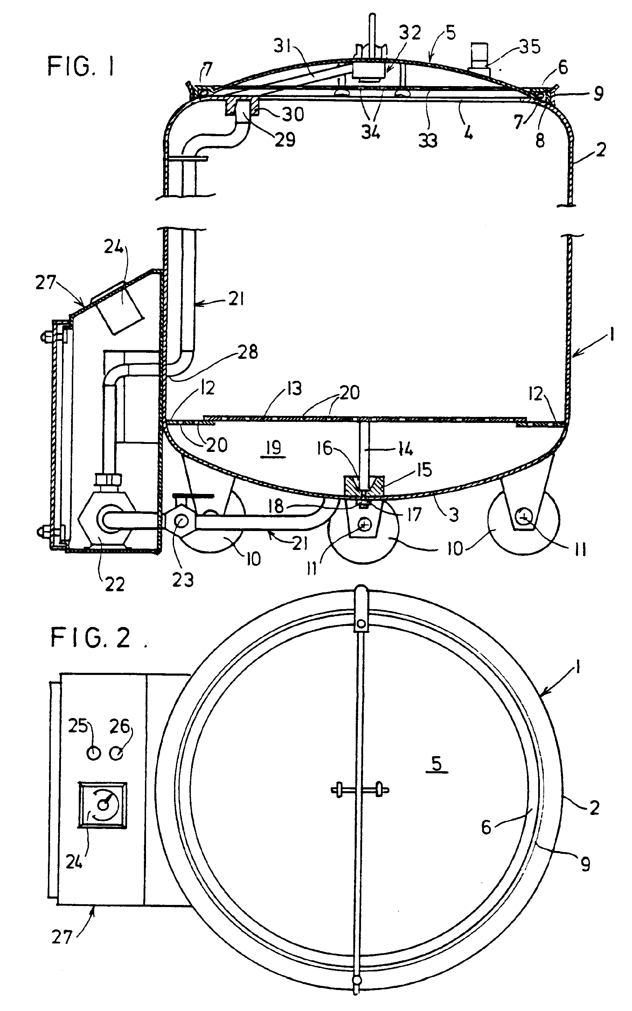

In der Zeichnung ist der Gegenstand der Erfindung an Hand eines Ausführungsbeispieles schematisch veranschaulicht. Fig.1 zeigt einen Vertikalschnitt durch die Vorrichtung. zig.2 zeigt eine Draufsicht auf dieselbe.

Die Vorrichtung hat einen Behälter 1 mit zylindrischer Seitenwand 2 und einen bombierten Boden 3. Oben ist der Behälter mit einer Öffnung 4 für die Ein- und Ausbringung des zu behandelnden Gutes versehen, die durch einen Deckel 5 luftdicht verschließbar ist. Hiezu ist der Deckel 5 entlang seines Umfanges mit einem Wulst 6 versehen, in den eine Dichtung 7 eingelegt ist, die sich gegen den eingezogenen oberen Rand 8 der Seitenwand 2 anlegt. Ein ringförmiger Steg 9, der von diesem Rand 8 nach oben absteht, sichert die Zentrierung des Deckels 5, der gegebenenfalls mittels nicht dargestellter Befestigungsorgane am Rand 8 des Behälter 1 befestigt werden kann.

Am Boden 3 des Behälters 1 sind mehrere Laufrollen 10 gelagert, mit denen der Behälter 1 verfahrbar ist. Die Achsen 11 der Laufrollen 10 bilden zweckmäßig zugleich Aufnahmen für einen Lift, mit welchem der Behälter angehoben werden kann.

Im unteren Bereich der Seitenwand 2 ist innen an dieser eine ringförmige Auflage 12 befestigt, auf welche ein abnehmbarer Siebboden 13 auflegbar ist. Die mittige Lage des Siebbodens 13 auf der Auflage 12 wird durch einen Zentrierzapfen 14 gesichert, der am Siebboden 13 befestigt ist und von diesem nach unten in eine Zentrierhülse 15 ragt, die am Boden 3 befestigt ist. Die Öffnung 16 dieser Hülse 15 erweitert sich nach oben konisch, um die Erführung des Zentrierzapfens 14 zu erleichtern. Zweckmäßig durchsetzt der Zentrierzapfen 14 den Boden 3 mit einer im Durchmesser abgesetzten Verlängerung 17, auf die eine Mutter 18 aufschraubbar ist. Dadurch ist der Siebboden 13 in seiner Lage fixierbar. Zwischen dem Siebboden 13 und dem Boden 3 liegt ein Auffangraum 19 für Behandlungsflüssigkeit und solche Flüssigkeit, welche aus dem auf dem Siebboden 13 aufgestapelten, zu behandelnden Gut durch dessen Eigengewicht ausgedrückt wird. Zu diesem Zweck ist der Siebboden 13 und zweckmäßig auch die Auflage 12 mit einer Vielzahl von Durchtrittsöffnungen 20 versehen, durch welche die erwähnte Flüssigkeit in den Auffangraum 19 rinnt. Von dor rinnt diese Flüssigkeit in eine Förderleitung 21, die an der tiefsten Stelle des Auffangraumes 19 an den Behälter 1 angeschlossen ist und zur Saugseite einer Pumpe 22 und von deren Druckseite wieder zurück in den Behälter 1 führt. An der tiefsten Stelle dieser Förderleitung 21 ist in diese ein Ablaßhahn 23 für die Flüssigkeit eingeschaltet. Die Pumpe 22 befindet sich außerhalb des Behälters 1, so daß ihr nicht dargestellter Motor, ein Zeitschaltwerk 24, ein Ein-Aus-Schalter 25 und eine Betriebsanzeigelampe 26 außerhalb des Behälters 1 in einem gesonderten Gehäuse 27 untergebracht werden können, das an dem Behälter 1 angeschweißt ist. Von diesem Gehäuse 27 führt die Förderleitung 21 wieder in den Behälter 1 zurück, und zwar an einer Stelle 26, die höher liegt als der Siebboden 13. Von dort verläuft die Förderleitung 21 entlang der Seitenwand 2 des Behälters 1 nach oben und führt zu einem Anschlußstutzen 29, auf den eine Verbindungsmuffe 30 dichtend aufsetzbar ist, die am Deckel 5 befestigt ist und von der eine Fortsetzung 31 der Förderleitung 21 zu einer am Deckel 5 innen befestigten Sprüheinrichtung 32 führt, mit der die Flüssigkeit auf das im Behälter 1 am Siebboden 13 aufgestapelte zu behandelnde Gut aufgesprüht werden kann. Dies geschieht jedoch nicht unmittelbar, vielmehr ist unterhalb der Sprüheinrichtung 32 am Deckel ein Verteilerlochblech 33 befestigt, das von der Sprüheinrichtung 32 besprüht wird und durch dessen Öffnungen 34 die Flüssigkeit, über den Querschnitt des Behälters 1 gleichmäßig verteilt, auf des zu behandelnde Gut rinnt. Am Deckel 5 ist ferner ein als Steckanschlußventil ausgebildeten Anschluß 35 für eine Vakuumleitung befestigt, durch welche der Innenraum des Behälters 1 evakuierbar ist.

Das Zeitschaltwerk 24 dient zur Einstellung eines impulsweisen Betriebes der Pumpe 22, wobei die Pausenzeit in Minutenbereich und die Betriebszeit im Bereich weniger Sekunden liegt, z.B. fünf Minuten Pause und fünf Sekunden Pumpdauer. Dadurch wird ein Trockenlauf der Pumpe 22 vermieden.

Der Anschlußstutzen 29 und die Verbindungsmuffe 30 befinden sich innerhalb des Behälters 1, so daß eine allfällige Undichtheit der von diesen Bauteilen gebildeten Steckkupplung ohne nachteiligen Einfluß bleibt. Der von der Einführungstelle 28 der Förderleitung 21 hochsteigende Strang derselben wird zweckmäßig eng an der Innenwand des Behälters 1 anliegend angeordnet, um im Behälter 1 möglichst wenig an Füllraum zu verlieren. Gegebenenfalls kann die Einführungsstelle 28 auch im obersten Bereich des Behälters 1, stets jedoch unterhalb der Verbindungsmuffe 30, angeordnet sein.

Zusatzlake kann entweder durch einen nicht dargestellten Anschlußstutzen der Förderleitung 21 zugeführt werden oder nach Abnahme des Deckels 5 von oben in den Behälter 1 eingeschüttet werden.

## Patentansprüche

1. Vorrichtung zur Intensivierung der Durchdringung von Fleisch oder Fleischwaren als zu behandelndem Gut mit Behandlungsflüssigkeit, mit einem Behälter (1) für das Gut, in dem eine Sprüheinrichtung (32) zur Besprühung des Gutes mit der Behandlungsflüssigkeit angeordnet ist, wobei im Behälter (1) unten ein Auffangraum (19) für die Behandlungsflüssigkeit liegt, von dem eine mit einer Pumpe (22) versehene Förderleitung (21) für die Behandlungsflüssigkeit zur im oberen Bereich des Behälters (1) angeordneten Sprüheinrichtung (32) führt, dadurch gekennzeichnet, daß die Sprüheinrichtung (32) innen an einem abnehmbaren Deckel (5) des Behälters (1) befestigt ist und daß im Behälter (1) ein Siebboden (13) für das aufeinandergestapelte Gut von der Behälterwand gehalten ist, wobei der Auffangraum (19) zwischen dem Siebboden (13) und dem Boden (3) des Behälters (1) liegt.

2. Vorrichtung nach Anspruch 1, dadurch gekennzeichnet, daß an die Pumpe (22) ein, vorzugsweise einstellbares, Zeitschaltwerk (24) für impulsweisen Betrieb angeschlossen ist.

3. Vorrichtung nach Anspruch 2, dadurch gekennzeichnet, daß die Pausenzeit des impulsweisen Betriebes um ein Vielfaches länger ist als die Betriebszeit, wobei vorzugsweise die Pausenzeit im Minutenbereich liegt, die Betriebszeit im Bereich weniger Sekunden.

4. Vorrichtung nach einem der Ansprüche 1 bis 3, dadurch gekennzeichnet, daß der vom Behälter (1) trennbare Siebboden (13) auf eine von der Seitenwand (2) des Behälters (1) nach innen abstehende Auflage (12) aufgelegt und durch einen Zentrierzapfen (14) am Boden (3) des Behälters (1) zentriert ist.

5. Vorrichtung nach einem der Ansprüche 1 bis 4, dadurch gekennzeichnet, daß an der tiefsten Stelle der Förderleitung (21) ein Ablaßhahn (23) vorgesehen ist.

6. Vorrichtung nach einem der Ansprüche 1 bis 5, dadurch gekennzeichnet, daß die Sprüheinrichtung (32) mittels einer einen vom Behälter (1) getragenen Anschlußstutzen (29) und eine vom Deckel (5) getragene Verbindungsmuffe (30) aufweisenden Steckkupplung an die Förderleitung (21) anschließbar ist.

7. Vorrichtung nach einem der Ansprüche 1 bis 6, dadurch gekennzeichnet, daß an der Innenseite des Deckels (5) unterhalb der Sprüheinrichtung (32) ein vom Deckel (5) getragenes Verteilerlochblech (33) angeordnet ist.

8. Vorrichtung nach einem der Ansprüche 1 bis 7, dadurch gekennzeichnet, daß die Pumpe (22) außerhalb des Behälters (1) angeordnet ist, wobei die Förderleitung (21) von der tiefsten Stelle des Auffangraumes (19), dessen Boden (3) durchsetzend, ausgeht, und an einer höher als der Siebboden (13) gelegenen Stelle (28) wieder in den Behälter (1) zurückführt.

9. Vorrichtung nach einem der Ansprüche 1 bis 8, dadurch gekennzeichnet, daß der Behälter (1) einen Anschluß (35) für eine Evakuiereinrichtung aufweist.

## Claims

1. A device for intensifying the penetration of a treating fluid into meat or meat products constituting a material to be treated, having a receptacle (1) for the material in which a spray device (32) for spraying the material with the treating fluid is arranged, at the bottom of the receptacle (1) there being a collecting chamber (19) for the treating fluid from which a conveying line (21) - provided with a pump (22) - for the treating fluid leads to the spray device (32) arranged in the upper region of the receptacle (1), characterized in that the spray device (32) is secured on the inside of a removable cover (5) of the receptacle (1) and in that in the receptacle (1) a sieve plate (13) for the piled up material is held by the receptacle wall, the collecting chamber (19) being between the sieve plate (13) and the base (3) of the receptacle (1).

2. A device in accordance with Claim 1, characterized in that a time switch (24) - preferably adjustable - for pulsed operation is attached to the pump (22).

3. A device in accordance with Claim 2, characterized in that the pause time of the pulsed operation is many times longer than the operating time, the pause time preferably being in the range of minutes and the operating time in the range of a few seconds.

4. A device in accordance with any one of Claims 1 to 3, characterized in that the sieve plate (13) separable from the receptacle (1) is placed onto a support (12) projecting inwards from the side wall (2) of the receptacle (1) and is centred by a centring pin (14) on the base (3) of the receptacle (1).

5. A device in accordance with any one of Claims 1 to 4, characterized in that a discharge cock (23) is provided at the lowest site of the conveying line (21).

6. A device in accordance with any one of Claims 1 to 5, characterized in that the spray device (32) is connectable to the conveying line (21) by means of a plug connection having a connection piece (29) borne by the receptacle (1) and a connection sleeve (30) borne by the cover (5).

7. A device in accordance with any one of Claims 1 to 6, characterized in that arranged on the inside of the cover (5) and below the spray device (32) there is a metal plate (33) with distribution perforations which is borne by the cover (5).

8. A device in accordance with any one of Claims 1 to 7, characterized in that the pump (22) is arranged outside the receptacle (1), the conveying line (21) issuing from the collecting chamber (19) lowest site - travelling through the base (3) of the latter - and leading back into the receptacle (1) again at a site (28) above the sieve plate (13).

9. A device in accordance with any one of Claims 1 to 8, characterized in that the receptacle (1) has a connection (35) for an evacuating device.

## Revendications

1. Dispositif pour intensifier la pénétration de liquide de traitement dans de la viande ou des produits de boucherie-charcuterie, constituant la matière à traiter, comprenant un récipient (1) pour la matière, dans lequel est installé un dispositif de pulvérisation (32) pour pulvériser le liquide de traitement sur la matière, le récipient (1) contenant en bas un espace collecteur (19) pour le liquide de traitement, d'où une conduite de recyclage (21) pour le liquide de traitement, conduite qui est munie d'une pompe, mène au dispositif de pulvérisation (32) installé dans la partie supérieure du récipient (1), caractérisé en ce que le dispositif de pulvérisation (32) est fixé à l'intérieur d'un couvercle amovible (5) du récipient (1) et que le récipient (1) contient un fond perforé (13) porté par la paroi du récipient et servant à supporter la matière empilée, l'espace collecteur (19) étant situé entre le fond perforé (13) et le fond proprement dit (3) du récipient (1).

2. Dispositif selon la revendication 1, caractérisé en ce qu'une minuterie (24) pour un fonctionnement par impulsions est connectée à la pompe (22), minuterie qui est de préférence réglable.

3. Dispositif selon la revendication 2, caractérisé en ce que la durée des intervalles du fonctionnement par impulsions correspond à un multiple de la durée de fonctionnement, la durée des intervalles étant de préférence de l'ordre de minutes et la durée de fonctionnement de l'ordre de quelques secondes.

4. Dispositif selon une des revendications 1 à 3, caractérisé en ce que le fond perforé (13), pouvant être séparé du récipient (1), est posé sur un appui (12) faisant saillie vers l'intérieur à partir de la paroi latérale (2) du récipient (1) et est centré par un axe de centrage (14) sur le fond (3) du récipient (1).

5. Dispositif selon une des revendications 1 à 4, caractérisé en ce qu'un robinet de vidange (23) est prévu au point le plus bas de la conduite de recyclage (21).

6. Dispositif selon une des revendications 1 à 5, caractérisé en ce que le dispositif de pulvérisation (32) peut être raccordé à la conduite de recyclage (21) au moyen d'un accouplement à emboîtement comportant une tubulure de raccordement (29) portée par le récipient (1) et un manchon de liaison (30) porté par le couvercle (5).

7. Dispositif selon une des revendications 1 à 6, caractérisé en ce qu'une tôle perforée de répartition (33), portée par le couvercle (5), est placée sous le dispositif de pulvérisation (32) sur le côté intérieur du couvercle (5).

8. Dispositif selon une des revendications 1 à 7, caractérisé en ce que la pompe (22) est installée à l'extérieur du récipient (1), la conduite de recyclage (21) partant du point le plus bas de l'espace collecteur (19), traversant son fond (3) et revenant à l'intérieur du récipient (1) à un endroit (28) situé plus haut que le fond perforé (13).

9. Dispositif selon une des revendications 1 à 8, caractérisé en ce que le récipient (1) présente un raccord (35) pour un dispositif d'évacuation (d'application d'un vide).

EP 0 414 734 B1

FIG. 1

FIG. 2.